# EUROPEAN PATENT SPECIFICATION

(11) **EP 4 105 077 B1**
(45) Date of publication and mention of the grant of the patent: **15.10.2025**
(21) Application number: 22178452.3
(22) Date of filing: 10.06.2022
(51) Int. Cl.: B60P 1/64, B60P 3/12, B62B 3/02

(54) **ROLL-OFF CONTAINER FOR THE TREATMENT OF DAMAGED VEHICLES**
ABROLLCONTAINER FÜR DIE BEHANDLUNG VON BESCHÄDIGTEN FAHRZEUGEN
CONTENEUR ROLL-OFF POUR LE TRAITEMENT DE VÉHICULES ENDOMMAGÉS

(30) Priority: 14.06.2021 IT 202100015500
(43) Date of publication of application: 21.12.2022
(60) Divisional application: 25189977.9
(73) Proprietor: Iveco S.p.A., 10156 Torino (IT)
(72) Inventor: AIMO BOOT, Marco, 10156 Torino (IT); SANTORO, Francesco, 10156 Torino (IT)
(74) Representative: Fiume, Orazio

(56) References cited:
- EP-A1- 2 281 716
- EP-A1- 3 263 402
- DE-U1- 202016 005 364
- KR-A- 20040 000 371
- NL-C2- 2 012 188

## Description

### Field of the invention

The present invention relates to a roll-off container for the treatment of out of order vehicles, in particular electrified out of order vehicles.

An electrified vehicle is an electric or hybrid vehicle, i.e. a vehicle that has a battery pack for propelling the same vehicle.

### State of the art

EP3263402 discloses a roll-off container, for decanting or ISO, for the treatment of damaged vehicles, in particular damaged electrified vehicles, comprising a bottom and several side walls that have a receiving area for the vehicle and define a closable opening for transferring the vehicle in or out of the receiving area, a winch arranged on the container, in particular a cable winch, to tow the vehicle into the container, and a number of connections for the introduction and/or discharge of the refrigerant or extinguishing agent into the receiving area.

In any case, it is an elongated container that identifies two long sides and two short sides.

From an examination of the description, it is evident that the aforementioned connections are of a hydraulic nature referring to the refrigerant or extinguishing agent.

The same document provides that, preferably, an infrared camera/video camera may be installed above one of the sides of the container as well as a lighting system to facilitate night operations.

The ISO type roll-off containers have a predetermined size. They can reach 7 meters and generally have a width not exceeding 2.5 m.

These dimensions cannot be exceeded, as they would make the heavy vehicle carrying them a special vehicle, with considerable circulation problems on public roads.

From these dimensions it is necessary to subtract the thickness of the container walls, therefore the internal volume is further reduced.

The trend towards hybrid and electrified vehicles is also extending to industrial vehicles over 3.5 tons, which easily exceed 6 meters in length and 2.2 meters in width.

It is also clear that in the event of an impact, an industrial vehicle can be deformed by increasing the width. It becomes difficult if not impossible to store an industrial vehicle equipped with one or more battery packs in a roll-off container to avoid the thermal drift of each battery pack by flooding the container.

If not specifically excluded in the detailed description that follows, what is described in this chapter is to be considered as an integral part of the detailed description.

### Summary of the invention

The object of the present invention is to provide a container for damaged electrified vehicles equipped with a battery system at risk of thermal drift which are larger than those that can be offered by roll-off ISO containers.

The basic idea of the present invention is to make an expandable container at least transversely with respect to the longitudinal development of the container, so as to be able to accommodate industrial vehicles and possibly even buses.

According to the present invention, the container comprises two portions, a right portion and a left portion, one sliding inside the other in a transverse direction with respect to the longitudinal development of the container.

The edges of the right portion and the edges of the left portion are folded in such a way that when the container is in a fully extended condition, the folded portions of the edges compress a gasket providing a hydraulic seal.

Both the left and the right portions define a continuous border that extends from the rear opening wall to the front wall passing through the bottom.

A single gasket can be associated with the portion of the edge that includes the front wall and the bottom, while the rear wall, being openable, comprises a set of gaskets associated with all the moving edges of the doors.

The container can be made in such a way as to have a modest extensibility, for example of 30 - 40 cm, as this is sufficient to accommodate most industrial vehicles. The extension and maintenance of the condition of complete extension is obtained by means of two or more hydraulic jacks interposed between the two portions of the container, for example, the cylinder of the jack is fixed to the left side, while the stem is fixed to the right side of the container.

According to a preferred variant of the invention, the bottom of the right portion of the container is not flat but has an emerging, raised longitudinal part, so that in the condition of expansion of the container, the vehicle introduced into the receiving area is level.

According to a preferred variant of the invention, the container can also be extended longitudinally. In particular, in the container as described above, hereinafter referred to as the "front portion", an additional container is arranged, hereinafter referred to as the "rear portion" which differs from the previous one only in that it has no front wall or is equipped with front and rear walls where both can be opened with two doors. When a particularly long vehicle, such as a city bus, must be "observed" to avoid the thermal drift of the relative battery pack, both containers are unloaded and when they are placed on the ground, they are made so that in an extended condition they have equal transversal extension. They can therefore be interconnected with special tie rods, with a special interface gasket interposed in order to ensure the seal, in order to be able, as described above, to introduce the damaged vehicle into the receiving area.

According to the present invention, after the container has been used, both the front and rear portions are retracted and the rear portion is repositioned inside the front one to be reloaded on the container heavy vehicle equipped with a hydraulic or electro-hydraulic extendable arm.

A rope can be operated using the arm of the container vehicle to tow the damaged vehicle inside the receiving area. In other words, the arm of the container vehicle, after unloading the container, is hooked to the rope used to force the damaged vehicle to enter the container receiving volume.

Alternatively, a winch fixed to the front portion of the container can be used.

The same arm of the container vehicle or the same winch can be used to bring the rear portion of the container back into the front portion, after using the extendable container.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figs. 1a and 1b show two operating conditions, retracted and unfolded, of an example of container according to the present invention;
Fig. 2 shows a perspective view of a portion of the container according to Figure 1a;
Fig. 3 shows a perspective view of the portion of the container according to Fig. 2 in an exploded condition;
Fig. 4 shows a detail of the container of the previous figures, according to the extended condition of figure 1b;

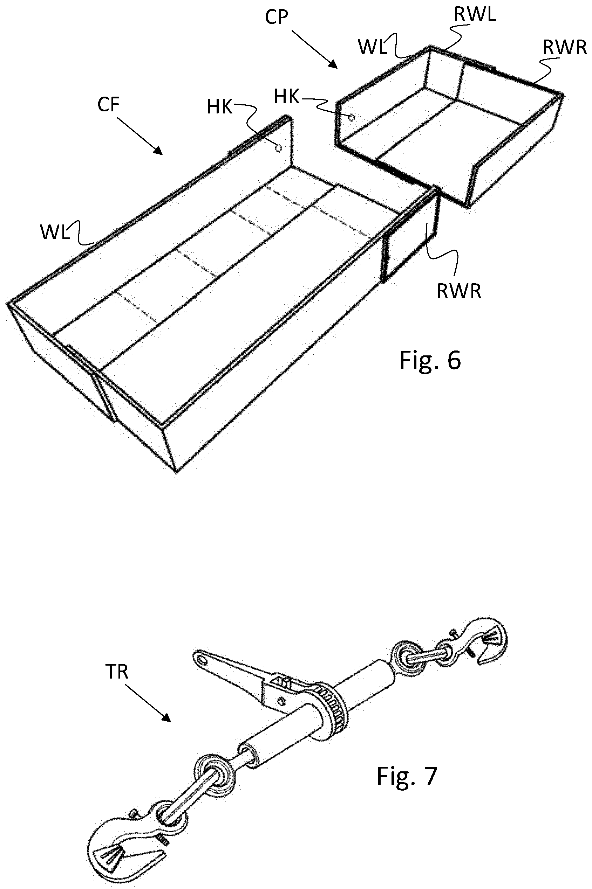

Figs. 5 and 6 show perspective views of a further preferred variant of the container according to the present invention,
Fig. 8 shows a system for introducing a vehicle into a container receiving area according to any of the previous variants;
Fig. 9 shows a system for introducing a vehicle into a container receiving area according to any of the variants of figures 1 to 7.

The same reference numbers and letters in the figures identify the same elements or components or functions.

It should be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

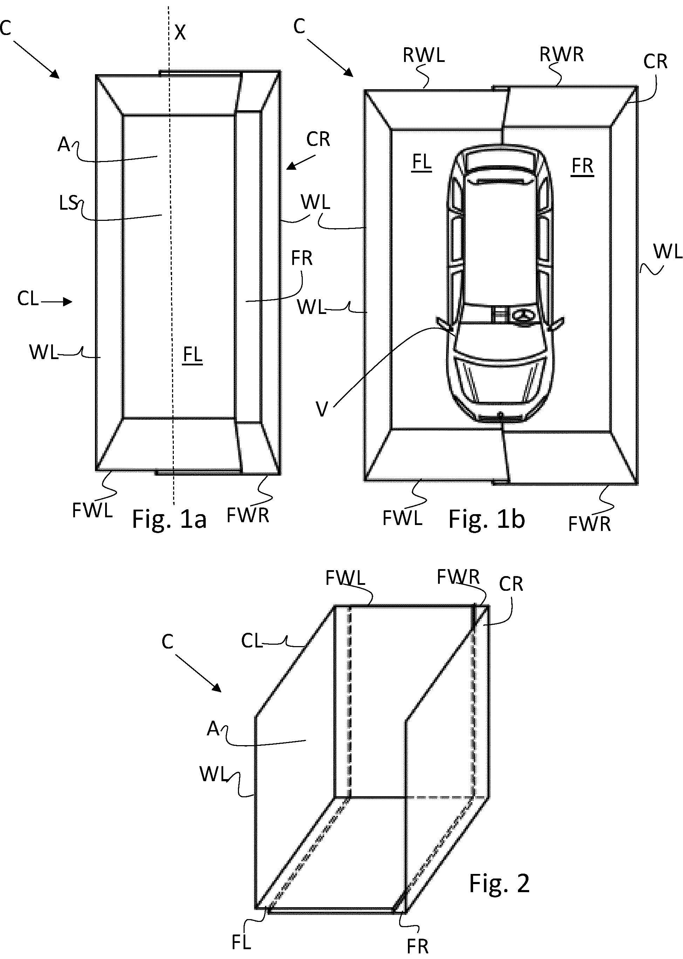

With reference to figures 1a, 1b and 2, an example of container C according to the present invention is shown.

It is specifically adapted for the treatment of damaged vehicles, in particular damaged electrified vehicles.

The container comprises a bottom F and several perimeter walls WL, FWL, RWL which define a volume A for receiving a damaged vehicle V and wherein the container has a longitudinal shape defining a longitudinal direction X with a pair of side walls WL, a front wall FWL and a rear wall RWL which defines a closable opening to transfer the damaged vehicle into or out of the receiving volume A.

The peculiarity of the container of the present invention is the fact that it can be extended in a transverse direction with respect to the longitudinal direction.

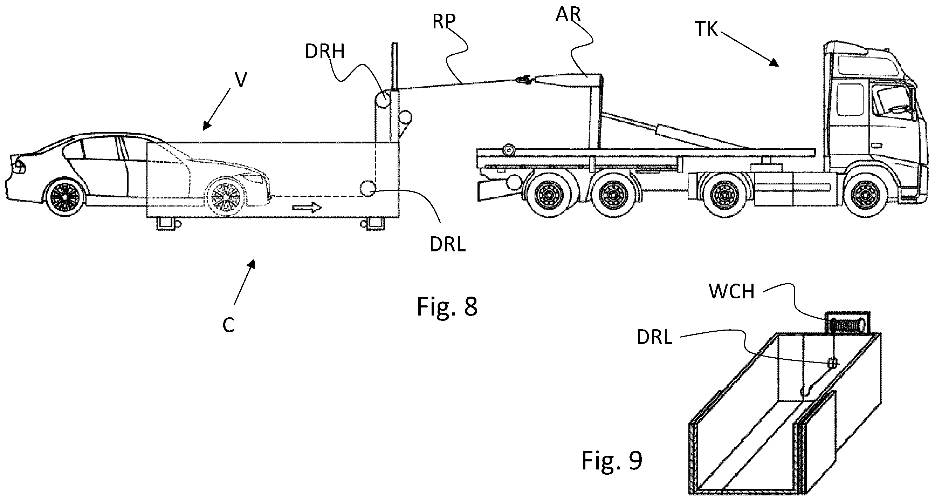

If we consider figure 8, and take into account that the container can be loaded or unloaded from the container vehicle TK, the front wall FWL of the container is intended to face the cabin of the container vehicle.

The container includes a right portion CR and a left portion CL, one sliding inside the other according to the transverse direction.

When the container is placed on the ground and the process of transversal extension begins, it is evident that the external portion remains stationary, while the internal portion extends to the condition of complete extension which is maintained throughout the use phase.

Each portion, right and left, comprises a bottom, a side wall, a front wall. Depending on the circumstances, each of them may also include a back wall.

Thus, in the retracted configuration, in which the right (or left) portion is inserted in the left (or right) portion, the edge BR of the bottom of one portion overlaps the bottom of the other portion and thus also the edge of the front wall of the other portion overlaps the front wall of the other portion.

Such edges are therefore referred to as overlapping edges. In the extended configuration, the overlapping edges BR of the right portion are proximal with the overlapping edges BL of the left portion. They are folded in such a way that, in the extended condition of the container, they compress a gasket (G) arranged between them, creating a seal.

The right portion and the left portion are interconnected by means of sliding guides associated at least to the bottom. At least one hydraulic or electric or electro-hydraulic actuator is associated with the container to allow it to extend and retract.

The sliding guides are made in such a way as not to interfere with the overlapping edges, so that these can mutually interfere with the gasket specifically interposed to make a seal.

The at least one actuator can define one of said sliding guides having a first end stably connected to the left portion and a second end, opposite to the first end, stably connected to the right portion of the container.

It is evident that also the front wall of the left portion can be interconnected by means of sliding guides to the front wall of the right portion, as described for the bottom.

The rear wall of the container can obviously be opened to allow the damaged vehicle to enter the receiving area and be extracted from it.

Preferably, the rear wall is divided into two doors with sealing gaskets. The RWR doors that define the rear wall are equipped with hinges that allow them to be overlapped on the side walls WL of the container. This is particularly useful in the situations described below.

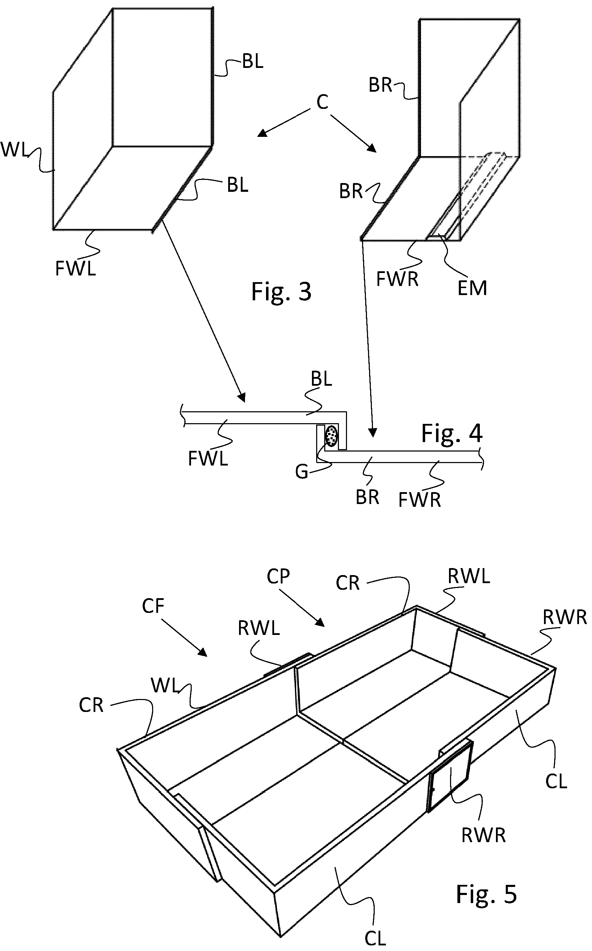

According to a preferred variant of the invention, which is combined with any of the previous variants, the external portion, for example the right one in Figure 3, comprises a longitudinal portion EM emerging in the receiving volume so as to define a horizontal support plane for the damaged vehicle.

The emerging part, in other words, allows to recover the uneven flow due to the overlapping of the two portions FR, FL of the bottom F.

It must be clear that even if the two right CR and left CR portions of the container are shown as two halves of the container, one can be larger than the other. For example, it can be considered to have achieved a remarkable result if the container is capable to reach an internal width, in a transversal sense, of 3 meters.

According to Figure 8, the container comprises a first deflection roller DRH arranged approximately on the upper edge of the front wall FWL and a second deflection roller DRL associated in a lower part of the front wall inside the receiving volume, so as to be able to place a tow rope RP between the first and second rollers and allow a damaged vehicle to be towed inside the receiving volume.

The second roller is arranged in such a way as to allow the vehicle to be towed parallel to the bottom F of the container.

According to a preferred method of using the container, the same arm AR of the container carrier vehicle TK is used, arranged for the transport of the roll-off container, to move the tow rope.

In particular, the towing rope RP is connected to the arm after the container has been unloaded, therefore a retraction of the arm induces a retraction of the rope. If this is previously connected to a vehicle V, this can be towed inside the receiving volume A.

This is particularly advantageous, since it is not necessary to feed a winch on board the container.

Alternatively, a winch associated with a tow truck or any vehicle equipped with a winch can be used.

According to a further preferred variant of the invention, the container can be longitudinally extensible in addition or as an alternative to the transverse extension described above.

Preferably, when the container is longitudinally extendable, it comprises a front portion CF and a rear portion CP, in which at least the rear portion is transversely extendable according to any of the variants described above. The rear portion of the container has no front wall or is equipped with a front wall that can be opened, for example by means of two doors which overlap the relative side walls. The rear portion of the container is made in such a way that it can be associated with the front portion to form a single container with a single receiving volume, capable of containing with a certain tightness the extinguishing and/or refrigerant liquid.

Each of the front and rear portions are equipped with slotted hooks HK associated with the respective side walls WL and in which the container is equipped with at least one tie rod TR for hooking the hooks and pulling the front portion against the rear portion so that the respective bottoms and the side walls are seamless.

According to a preferred aspect of the present invention, the composition of the container by means of the front and rear portions, includes the following steps:
- Opening the rear wall RWR, RWL,
- lifting of the front portion of the container by means of an arm AR of the container vehicle, so as to induce the rear portion to slide out of the front portion and simultaneous advancement of the container vehicle,
- unloading of the front portion so that the front portion of the container is aligned and proximal to the rear portion,
- transversal expansion of the rear portion of the container so as to have the same width as the front portion of the container,
- connection of the front portion to the rear portion by means of at least one tie rod TR so that the respective bottoms and the respective side walls are seamless, guaranteeing also the hydraulic seal,
- opening of the doors RWL, RWR defining the rear wall of the rear portion of the container to allow entry of the damaged vehicle V into the receiving volume A;
- introduction of the damaged vehicle V into the receiving volume.

The fact that the rear portion of the container is provided with the front and openable wall is advantageous since, in this way, the front and rear portions of the container can be used independently of each other, each defining a receiving volume to accommodate damaged vehicles.

According to a preferred aspect of the invention, a method of recovering a container by means of a TK container vehicle is described, according to the following steps:
- disconnection of the front portion from the rear portion of the container,
- transverse retraction of at least the rear portion,
- closing with mutual overlapping of the doors RWL, RWR defining the rear wall of the rear portion CP of the container,
- insertion of the rear portion of the container into the respective front portion,
- closing with mutual overlapping of the doors RWL, RWR defining the front wall CF of the rear portion of the container,
- recovery of the front portion, while the rear portion is inserted into the front portion, by means of the arm of a container vehicle TK.

The damaged vehicle as well as the rear portion of the container can be inserted into the front portion by means of a tow rope RP associated
- to the winch WCH, described above, or
- to the arm RM of the container vehicle or to a winch of a tow truck being the rope associated with a first deflection roller DRH and a second deflection roller DRL arranged respectively in an upper and lower part of the front wall of the front portion CF of the container C so as to pull the vehicle or the rear portion of the container parallel to the ground and the bottom.

Implementation variants of the described non-limiting example are possible, without however departing from the scope of protection of the appended claims.

From the above description, the person skilled in the art is able to realize the object of the invention without introducing further construction details.

## Claims

1. A roll-off container (C) for the treatment of damaged vehicles, in particular damaged electrified vehicles, comprising a bottom (F) and several perimeter walls (WL, FWL, RWL) that define a volume (A) for receiving a vehicle damaged (V) and wherein the container has a longitudinal shape defining a longitudinal direction (X) with a pair of side walls (WL), a front wall (FWL) and a rear wall (RWL) which defines a closable opening to transfer the damaged vehicle inside or outside the volume (A), the roll-off container being **characterised in that** the container is extensible in a direction transverse to said longitudinal direction, so as defining a retracted configuration wherein a right (or left) portion is inserted into the left (or right) portion and an extended configuration in which the edges (BR) of the walls of one overlap the walls of the other and are proximal to each other wherein the edges are folded in such a way as to compress a gasket (G) arranged between them to form liquid-tight.

2. Container according to claim 1, comprising a right portion (CR) and a left portion (CL), one sliding inside the other according to said transverse direction.

3. Container according to any one of the preceding claims, wherein the right portion and the left portion comprise sliding guides incorporated or connected in/with the respective bottom portion.

4. Container according to claim **3,** wherein at least one of said sliding guides are configured as a hydraulic actuator having a first end stably connected to the left portion and a second end, opposite to the first end, stably connected to the right portion of the container.

5. Container according to any one of the preceding claims, wherein the openable rear wall comprises a pair of doors, each hinged to a respective side wall (WL).

6. Container according to any one of the preceding claims 1 **- 5,** wherein the bottom of the outer portion, right or left, of the container comprises an emerging longitudinal portion (EM) in the volume so as to define a horizontal support plane for the damaged vehicle.

7. Container according to any one of the preceding claims, further comprising a first deflection roller (DRH) or a winch (WCH) arranged approximately on the upper edge of the front wall (FWL) and a second deflection roller (DRL) associated in one part of the front wall inside the volume (A), so as to allow a towing rope (RP) to be arranged to tow the damaged vehicle (V) inside the receiving volume.

8. Container according to any one of the preceding claims, **characterized in that** it can be extended longitudinally as well as transversely.

9. Container according to claim 8, comprising a front portion (CF) and a rear portion (CP), wherein at least the rear portion is transversely extendable according to any one of claims 1 to 7, without the front wall or equipped with a front wall that can be opened and arranged, in an extended condition, to be associated with the front portion to form a single container with a single volume for receiving the damaged vehicle.

10. Container according to claim 9, in which each of said front and rear portions are equipped with slotted hooks (HK) associated with the respective side walls (WL) and in which the container is equipped with at least one tie rod (TR) to hook said hooks and pull the front portion against the rear portion so that the respective bottoms and side walls are seamless.

11. Method of unloading a container according to any one of claims 8 to 10 from a container vehicle (TK), comprising the following steps:
- Opening the rear wall (RWR, RWL),
- lifting of the front portion of the container by means of an arm (AR) of the container vehicle, so as to induce the rear portion to slide out of the front portion and simultaneous advancement of the container vehicle,
- unloading of the front portion so that the front portion of the container is aligned and proximal to the rear portion,
- transverse expansion of the rear portion of the container so as to have the same width as the front portion of the container,
- connection of the front portion to the rear portion by at least one tie rod (TR) so that the respective bottoms and the respective side walls are seamless,
- opening of the doors (RWL, RWR) defining the rear wall of the rear portion of the container to allow the damaged vehicle (V) to enter the receiving volume (A);
- introduction of the damaged vehicle (V) in the volume.

12. Method of recovering a container according to any one of claims 8 to 10 from a container vehicle (TK), comprising the following steps:
- Disconnection of the front portion from the rear portion of the container,
- transverse retraction of at least the rear portion,
- reciprocal overlapping of the wings (RWL, RWR) defining the rear wall of the rear portion (CP) of the container,
- insertion of the rear portion of the container into the respective front portion,
- reciprocal closure or overlapping of the wings (RWL, RWR) defining the front wall (CF) of the rear portion of the container,
- recovery of the front portion, while the rear portion is inserted in the front portion, by means of the arm of a container vehicle (TK).

13. Method according to claims 11 or 12 wherein said insertion of the damaged vehicle or of the rear portion of the container is achieved by means of an associated tow rope (RP)
- to said winch (WCH), according to claim 8, or
- to said arm (RM) of the container vehicle or to a winch of a tow truck being the rope associated with a first deflection roller (DRH) and a second deflection roller (DRL) arranged respectively in an upper and lower part of the front wall of the front portion (CF) of the container so as to pull the vehicle or the rear portion of the container parallel to the ground.

## Patentansprüche

1. Abrollcontainer (C) zur Behandlung von beschädigten Fahrzeugen, insbesondere beschädigten Elektrofahrzeugen, bestehend aus einem Boden (F) und mehreren umfänglichen Wänden (WL, FWL, RWL), die ein Volumen (A) zur Aufnahme eines beschädigten Fahrzeugs (V) definieren, und wobei der Container eine längliche Form aufweist, die eine Längsrichtung (X) definiert, mit einem Paar Seitenwänden (WL), einer Vorderwand (FWL) und einer Rückwand (RWL), die eine verschließbare Öffnung zum Transport des beschädigten Fahrzeugs innerhalb oder außerhalb des Volumens (A) definiert, wobei der Abrollcontainer **dadurch gekennzeichnet ist, dass** der Container in einer Richtung quer zur Längsrichtung ausziehbar ist, wobei er eine eingefahrene Konfiguration definiert, in der ein rechter (oder linker) Teil in den linken (oder rechten) Teil eingesetzt ist, und eine ausgefahrene Konfiguration, in der die Kanten (BR) der Wände des einen Teils die Wände des anderen überlappen und nahe beieinander liegen, wobei die Kanten sind so gefaltet, dass sie eine dazwischen angeordnete Dichtung (G) flüssigkeitsdicht zusammendrücken.

2. Container nach Anspruch 1, bestehend aus einem rechten (CR) und einem linken (CL) Teil, die in Querrichtung ineinander gleiten.

3. Container nach einem der vorhergehenden Ansprüche, wobei der rechte und der linke Teil Gleitführungen aufweisen, die in den jeweiligen Bodenteil integriert oder mit diesem verbunden sind.

4. Container nach Anspruch **3,** wobei mindestens eine der Gleitführungen als hydraulischer Aktuator konfiguriert ist, dessen erstes Ende fest mit dem linken Teil und dessen zweites, dem ersten Ende gegenüberliegendes Ende fest mit dem rechten Teil des Behälters verbunden ist.

5. Container nach einem der vorhergehenden Ansprüche, wobei die zu öffnende Rückwand zwei Türen umfasst, die jeweils an einer Seitenwand (WL) angelenkt sind.

6. Container nach einem der vorhergehenden Ansprüche 1-5, wobei der Boden des äußeren rechten oder linken Behälterabschnitts einen in das Volumen ragenden Längsabschnitt (EM) aufweist, der eine horizontale Auflageebene für das beschädigte Fahrzeug definiert.

7. Container nach einem der vorhergehenden Ansprüche, ferner umfassend eine erste Umlenkrolle (DRH) oder eine Seilwinde (WCH), die etwa an der Oberkante der Vorderwand (FWL) angeordnet ist, und eine zweite Umlenkrolle (DRL), die in einem Teil der Vorderwand innerhalb des Volumens (A) angeordnet ist, um die Anordnung eines Abschleppseils (RP) zum Abschleppen des beschädigten Fahrzeugs (V) innerhalb des Aufnahmevolumens zu ermöglichen.

8. Container nach einem der vorhergehenden Ansprüche, **dadurch gekennzeichnet, dass** er sowohl längs als auch quer ausziehbar ist.

9. Container nach Anspruch 8, bestehend aus einem Vorderteil (CF) und einem Hinterteil (CP), wobei zumindest das Hinterteil gemäß einem der Ansprüche 1 bis 7 quer ausziehbar ist, entweder ohne Vorderwand oder mit einer Vorderwand ausgestattet, die geöffnet und im ausgefahrenen Zustand mit dem Vorderteil verbunden werden kann, um einen einzigen Behälter mit einem einzigen Volumen zur Aufnahme des beschädigten Fahrzeugs zu bilden.

10. Container nach Anspruch 9, wobei das Vorder- und Hinterteil jeweils mit Schlitzhaken (HK) ausgestattet sind, die den jeweiligen Seitenwänden (WL) zugeordnet sind, und wobei der Container mit mindestens einer Zugstange (TR) ausgestattet ist, um die Haken einzuhaken und das Vorderteil gegen das Hinterteil zu ziehen, sodass die jeweiligen Böden und Seitenwände nahtlos miteinander verbunden sind.

11. Verfahren zum Entladen eines Containers nach einem der Ansprüche 8 bis 10 von einem Behälterfahrzeug (TK), umfassend die folgenden Schritte:
- Öffnen der Rückwand (RWR, RWL),
- Anheben des Vorderteils des Containers mittels eines Arms (AR) des Containerfahrzeugs, wodurch der Hinterteil des Containers aus dem Vorderteil herausgleitet und gleichzeitig das Containerfahrzeug vorgeschoben wird,
- Entladen des Vorderteils, sodass das Vorderteil des Containers bündig mit dem Hinterteil abschließt,
- Querausdehnen des Hinterteils des Containers, sodass er die gleiche Breite wie das Vorderteil des Containers aufweist,
- Verbinden des Vorderteils des Containers mit dem Hinterteil des Containers durch mindestens eine Zugstange (TR), sodass die jeweiligen Böden und Seitenwände nahtlos sind,
- Öffnen der Türen (RWL, RWR), die die Rückwand des Hinterteils des Containers begrenzen, um dem beschädigten Fahrzeug (V) die Einfahrt in das Aufnahmevolumen (A) zu ermöglichen;
- Einbringen des beschädigten Fahrzeugs (V) in das Volumen.

12. Verfahren zum Bergen eines Containers nach einem der Ansprüche 8 bis 10 von einem Containerfahrzeug (TK), umfassend die folgenden Schritte:
- Abnehmen des Vorderteils vom Hinterteil des Containers;
- Querrückzug zumindest des Hinterteils;
- Gegenseitiges Überlappen der die Rückwand des Hinterteils (CP) des Containers bildenden Flügel (RWL, RWR) ;
- Einsetzen des Hinterteils des Containers in das entsprechende Vorderteil;
- Gegenseitiges Schließen oder Überlappen der die Vorderwand (CF) des Hinterteils des Containers bildenden Flügel (RWL, RWR);
- Bergen des Vorderteils, während das Hinterteil in das Vorderteil, mittels des Arms eines Containerfahrzeugs (TK), eingesetzt wird.

13. Verfahren nach Anspruch 11 oder 12, wobei das Einbringen des beschädigten Fahrzeugs oder des Hinterteils des Containers mittels eines Zugseils (RP) erfolgt,
- das mit der Winde (WCH) gemäß Anspruch 8 oder mit dem Arm (RM) des Containerfahrzeugs oder mit der Winde eines Abschleppwagens verbunden ist, wobei das Seil mit einer ersten Umlenkrolle (DRH) und einer zweiten Umlenkrolle (DRL) verbunden ist, die jeweils im oberen und unteren Teil der Vorderwand des Vorderteils des Containers (CF) angeordnet sind, um das Fahrzeug oder das Hinterteil des Containers parallel zum Boden zu ziehen.

## Revendications

1. Conteneur roll-off (C) pour le traitement des véhicules endommagés, notamment des véhicules électriques endommagés, comprenant un fond (F) et plusieurs parois périphériques (WL, FWL, RWL) définissant un volume (A) destiné à recevoir un véhicule endommagé (V), et dans lequel le conteneur présente une forme longitudinale définissant une direction longitudinale (X) avec deux parois latérales (WL), une paroi avant (FWL) et une paroi arrière (RWL) définissant une ouverture obturable pour le transfert du véhicule endommagé à l'intérieur ou à l'extérieur du volume (A), le conteneur roll-off étant **caractérisé en ce que** le conteneur est extensible dans une direction transversale à ladite direction longitudinale, définissant une configuration rétractée, dans laquelle une partie droite (ou gauche) est insérée dans la partie gauche (ou droite), et une configuration étendue dans laquelle les bords (BR) des parois de l'une chevauchent les parois de l'autre et sont proches l'un de l'autre, dans lequel les bords sont pliés de telle sorte, qu'l compriment un joint (G) agencé entre eux pour former un étant étanche aux liquides.

2. Conteneur selon la revendication 1, comprenant une partie droite (CR) et une partie gauche (CL), l'une coulissant dans l'autre selon ladite direction transversale.

3. Conteneur selon l'une quelconque des revendications précédentes, dans lequel la partie droite et la partie gauche comprennent des guides coulissants intégrés ou reliés à l'intérieur ou avec leur partie de fond respective.

4. Conteneur selon la revendication 3, dans lequel au moins un desdits guides coulissants est configuré comme un actionneur hydraulique dont une première extrémité est reliée de manière stable à la partie gauche et une deuxième extrémité, opposée à la première extrémité, est reliée de manière stable à la partie droite du conteneur.

5. Conteneur selon l'une quelconque des revendications précédentes, dans lequel la paroi arrière ouvrable comprend une paire de portes, chacune articulée sur une paroi latérale (WL) respective.

6. Conteneur selon l'une quelconque des revendications précédentes 1 - 5, dans lequel le fond de la partie extérieure, droite ou gauche, du conteneur comprend une partie longitudinale émergente (EM) dans le volume afin de définir un plan d'appui horizontal pour le véhicule endommagé.

7. Conteneur selon l'une quelconque des revendications précédentes, comprenant en outre un premier rouleau de déviation (DRH) ou un treuil (WCH) agencé approximativement sur le bord supérieur de la paroi avant (FWL) et un deuxième rouleau de déviation (DRL) associé dans une partie de la paroi avant à l'intérieur du volume (A), afin de permettre la mise en place d'un câble de remorquage (RP) pour remorquer le véhicule endommagé (V) à l'intérieur du volume de réception.

8. Conteneur selon l'une quelconque des revendications précédentes, **caractérisé en ce qu'**il peut être étendu longitudinalement et aussi transversalement.

9. Conteneur selon la revendication 8, comprenant une partie avant (CF) et une partie arrière (CP), dans lequel au moins la partie arrière est extensible transversalement selon l'une quelconque des revendications 1 à 7, sans la paroi avant ou équipée d'une paroi avant ouvrable et disposée, en position déployée, pour être associée à la partie avant afin de former un conteneur unique de volume unique destiné à recevoir le véhicule endommagé.

10. Conteneur selon la revendication **9,** dans lequel chacune desdites parties avant et arrière est équipée de crochets fendus (HK) associés aux parois latérales respectives (WL) et dans lequel le conteneur est équipé d'au moins une tige de traction (TR) pour accrocher lesdits crochets et tirer la partie avant contre la partie arrière, de sorte que les fonds et les parois latérales respectifs soient sans joint.

11. Procédé de déchargement d'un conteneur selon l'une quelconque des revendications 8 à 10 d'un véhicule porte-conteneurs (TK), comprenant les étapes suivantes :
- Ouverture de la paroi arrière (RWR, RWL),
- Soulèvement de la partie avant du conteneur au moyen d'un bras (AR) du véhicule porte-conteneurs, de manière à provoquer le coulissement de la partie arrière hors de la partie avant et à faire avancer simultanément le véhicule porte-conteneurs,
- Déchargement de la partie avant de manière à ce que la partie avant du conteneur soit alignée et proximale avec la partie arrière,
- Expansion transversale de la partie arrière du conteneur de manière à ce qu'elle ait la même largeur que la partie avant du conteneur,
- Connexion de la partie avant avec la partie arrière par au moins un tirant (TR) de manière à ce que les fonds et les parois latérales respectifs soient sans joint,
- Ouverture des portes (RWL, RWR) définissant la paroi arrière de la partie arrière du conteneur pour permettre au véhicule endommagé (V) d'entrer dans le volume de réception (A) ;
- Introduction du véhicule endommagé (V) dans le volume.

12. Procédé de récupération d'un conteneur selon l'une quelconque des revendications 8 à 10 à partir d'un véhicule porte-conteneurs (TK), comprenant les étapes suivantes :
- Déconnexion de la partie avant de la partie arrière du conteneur ;
- Rétraction transversale d'au moins la partie arrière ;
- Chevauchement réciproque des ailes (RWL, RWR) définissant la paroi arrière de la partie arrière (CP) du conteneur ;
- Insertion de la partie arrière du conteneur dans la partie avant respective ;
- Fermeture ou chevauchement réciproque des ailes (RWL, RWR) définissant la paroi avant (CF) de la partie arrière du conteneur ;
- Récupération de la partie avant, la partie arrière étant insérée dans la partie avant, au moyen du bras d'un véhicule porte-conteneurs (TK).

13. Procédé selon les revendications 11 ou 12, dans lequel l'insertion du véhicule endommagé ou de la partie arrière du conteneur est réalisée au moyen d'un câble de remorquage (RP) associé
- audit treuil (WCH), selon la revendication 8, ou
- audit bras (RM) du véhicule conteneur ou à un treuil d'une dépanneuse, le câble étant associé à un premier rouleau de déviation (DRH) et à un deuxième rouleau de déviation (DRL) agencés respectivement dans une partie supérieure et inférieure de la paroi avant de la partie avant (CF) du conteneur, de manière à tirer le véhicule ou la partie arrière du conteneur parallèlement au sol.
